# EUROPEAN PATENT APPLICATION

(11) **EP 3 313 026 A1**
(43) Date of publication of application: **25.04.2018**
(21) Application number: 15895504.7
(22) Date of filing: 23.12.2015
(51) Int. Cl.: H04L 12/66, H04L 29/06

(54) **METHOD, DEVICE AND USER EQUIPMENT FOR ESTABLISHING DEDICATED BEARER**

(30) Priority: 16.06.2015 CN 201510332528
(71) Applicant: ZTE Corporation, Shenzhen, Guangdong 518057 (CN)
(72) Inventor: GAO, Yang, Shenzhen Guangdong 518057 (CN)
(74) Representative: Regimbeau
(86) International application number: PCT/CN2015/098477
(87) International publication number: WO 2016/201939

(57) **Abstract**

Provided are a method and apparatus for establishing a dedicated bearer, and a user equipment. The method includes determining that a media stream between an external device and a remote device needs to be transmitted via a user equipment, where the user equipment communicates with the remote device via a bearer network; and establishing a dedicated bearer between the user equipment and the bearer network, where the media stream between the external device and the remote device is transmitted in the dedicated bearer. A problem in which the requirement on quality of service (QoS) of a media stream on an external device cannot be assured is solved, and QoS is assured, through a dedicated bearer, for transmission of the media stream of the external device.

## Description

### TECHNICAL FIELD

The present invention relates to communications and, in particular, to a method and apparatus for establishing a dedicated bearer, and a user equipment.

### BACKGROUND

With the development of wireless technologies, especially the popularization of the third generation of communication technology (3G)/the fourth generation of communication technology (4G), more and more user equipments (UEs) including but not limited to smart handheld devices or dedicated 3G/4G wireless router devices open their own 3G/4G access capabilities to external devices around the UEs by way of a wireless local area network (Wi-Fi) hotspot. This allows other devices to surf the Internet fast and conveniently in the mobile environment.

Currently, although the UEs open their 3G/4G access capabilities to external devices by way of a Wi-Fi hotspot, a default bearer rather than a dedicated bearer is used between a UE and a bearer network, so quality of service (QoS) cannot be assured for such transmission.

If media streams (i.e., plug-in media streams, such as video and audio calls, or interactive application services) on external devices have QoS requirements, services cannot be performed due to the above restrictions.

In addition, when the UEs open their 3G/4G access capabilities to external devices by way of a Wi-Fi hotspot, the UEs may also provide Net Address Translation (NAT) functions for the external devices. That is, an Internet Protocol (IP) address and a port in a private network are transformed into an IP address and a port in a public network. That is, IP address mapping is performed.

For example, a company has a private network (whose network segment is assumed to be 10.1.1.1) and accesses the Internet through a public network server (gateway A). The private IP address of the public network server is 10.1.1.1 and the public IP address of the public network server is 220.220.1.6. A machine B (whose IP address is assumed to be 10.1.1.102) in the private network opens its port 88 to connect to a WEB server (server C whose IP address is assumed to be 204.56.43.8 and whose port is assumed to be 80) in the public network. This process is implemented through a NAT function as follows:

In step 1, the machine B sends a data packet (10.1.1.102:88-> 204.56.43.8:80) to the gateway A (10.1.1.1);

In step 2, the gateway A replaces a source IP address (10.1.1.102:88) of the data packet with the public IP address of the public network server, allocates a port (assumed to be 200), and sends out a data packet (220.220.1.6:200->204.56.43.8:80);

In step 3, the server C sends a response packet (204.56.43.8:80-> 220.220.1.6:200) to the gateway A;

In step 4, the gateway A modifies the destination address and port of the response packet returned by the server C, and then sends out the response packet (204.56.43.8:80-> 10.1.1.102:88);

In step 5, the machine B receives the response packet of the server C.

From the perspective of the machine B, the machine B cannot feel that it is in the private network and has rights just as on the public network. This is the advantage of NAT: The same public IP address can be used by multiple users to access the Internet.

No effective solution has been provided to solve a problem in which QoS requirements of a media stream on an external device cannot be assured in the related art.

### SUMMARY

To solve the above problem, embodiments of the present invention provide a method and apparatus for establishing a dedicated bearer, and a user equipment.

According to one aspect of embodiments of the present invention, a method for establishing a dedicated bearer is provided. The method includes determining that a media stream between an external device and a remote device needs to be transmitted via a user equipment, where the user equipment communicates with the remote device via a bearer network; and establishing a dedicated bearer between the user equipment and the bearer network, where the media stream between the external device and the remote device is transmitted in the dedicated bearer.

Optionally, the determining that the media stream between the external device and the remote device needs to be transmitted via the user equipment includes: using the user equipment to receive a media description or a bearer resource modification request of the external device; and using the user equipment to determine, according to the media description or the bearer resource modification request, that the media stream between the external device and the remote device needs to be transmitted via the user equipment.

Optionally, before the using the user equipment to receive the media description of the external device, the method further includes: using the user equipment to send a media description query request or a call request of the remote device to the external device.

Optionally, the using the user equipment to determine that the media stream between the external device and the remote device needs to be transmitted via the user equipment includes: using the user equipment to receive a preset message of the external device, where the preset message includes one of the following: a call request, a registration request, a call response and a media description query response, and the preset message carries the media description/the bearer resource modification request; and using the user equipment to determine, according to the preset message, that the media stream between the external device and the remote device needs to be transmitted via the user equipment.

Optionally, the establishing the dedicated bearer between the user equipment and the bearer network includes: using the user equipment to send the bearer resource modification request to the bearer network, where the bearer resource modification request is used for requesting to establish the dedicated bearer.

Optionally, the establishing the dedicated bearer between the user equipment and the bearer network includes: using the user equipment to send the bearer resource modification request to a packet data network gateway (P-GW) of the bearer network; using the P-GW to interact with a policy and charging rules function (PCRF); using the PCRF to trigger a process in which the bearer network establishes the dedicated bearer; and using the bearer network to establish the dedicated bearer.

Optionally, the establishing the dedicated bearer between the user equipment and the bearer network includes: using the user equipment to send the bearer resource modification request to a PCRF of the bearer network; using the PCRF to trigger a process in which the bearer network establishes the dedicated bearer; and using the bearer network to establish the dedicated bearer.

Optionally, the determining that the media stream between the external device and the remote device needs to be transmitted via the user equipment includes: using the bearer network to receive a media description of the external device; and using the bearer network to determine, according to the media description, that the media stream between the external device and the remote device needs to be transmitted via the user equipment.

Optionally, the establishing the dedicated bearer between the user equipment and the bearer network includes: using an application function (AF) of the bearer network to receive a call request sent by the user equipment; using the AF to interact with a PCRF; using the PCRF to trigger a process in which the bearer network establishes the dedicated bearer; and using the bearer network to establish the dedicated bearer.

According to another aspect of embodiments of the present invention, an apparatus for establishing a dedicated bearer is provided. The apparatus is applied to a user equipment and includes: a determining module, which is configured to determine that a media stream between an external device and a remote device needs to be transmitted via a user equipment, where the user equipment communicates with the remote device via a bearer network; and an establishing module, which is configured to establish a dedicated bearer between the user equipment and the bearer network, where the media stream between the external device and the remote device is transmitted in the dedicated bearer.

Optionally, the determining module includes: a receiving unit, which is configured to receive a media description or a bearer resource modification request of the external device; and a determining unit, which is configured to determine, according to the media description or the bearer resource modification request, that the media stream between the external device and the remote device needs to be transmitted via the user equipment.

Optionally, the apparatus further includes: a sending module, which is configured to send a media description query request or a call request of the remote device to the external device.

Optionally, the receiving unit is configured to receive a preset message of the external device, where the preset message includes one of the following: a call request, a registration request, a call response and a media description query response, and the preset message carries the media description/the bearer resource modification request; and the determining unit is configured to determine, according to the preset message, that the media stream between the external device and the remote device needs to be transmitted via the user equipment.

Optionally, the establishing module is configured to send the bearer resource modification request to the bearer network, where the bearer resource modification request is used for requesting to establish the dedicated bearer.

According to yet another aspect of embodiments of the present invention, an apparatus for establishing a dedicated bearer is provided. The apparatus is applied to a bearer network and includes: a determining module, which is configured to determine that a media stream between an external device and a remote device needs to be transmitted via a user equipment, where the user equipment communicates with the remote device via a bearer network; and an establishing module, which is configured to establish a dedicated bearer between the user equipment and the bearer network, where the media stream between the external device and the remote device is transmitted in the dedicated bearer.

Optionally, the determining module includes: a receiving unit, which is configured to receive a media description of the external device; and a determining unit, which is configured to determine, according to the media description, that the media stream between the external device and the remote device needs to be transmitted via the user equipment.

According to still another aspect of embodiments of the present invention, provided is a UE. The UE includes the above apparatus for establishing a dedicated bearer.

Through embodiments of the present invention, a method is provided to determine that a media stream between an external device and a remote device needs to be transmitted via a user equipment, where the user equipment communicates with the remote device via a bearer network; and establish a dedicated bearer between the user equipment and the bearer network, where the media stream between the external device and the remote device is transmitted in the dedicated bearer. This solves a problem in which the requirement on quality of service (QoS) of a media stream on an external device cannot be assured, and assures, through a dedicated bearer, QoS for transmission of the media stream of the external device.

### BRIEF DESCRIPTION OF DRAWINGS

The accompanying drawings described herein are used to provide a further understanding of the present invention, and form a part of the present application. The schematic embodiments and descriptions thereof in the present invention are used to explain the present invention, and do not form improper limits to the present invention. In the accompanying drawings:
FIG. 1 is a flowchart of a method for establishing a dedicated bearer according to embodiments of the present invention;
FIG. 2 is a structure diagram 1 of a system for establishing a dedicated bearer according to embodiments of the present invention;
FIG. 3 is a structure diagram 2 of a system for establishing a dedicated bearer according to embodiments of the present invention;
FIG. 4 is a structure diagram 3 of a system for establishing a dedicated bearer according to embodiments of the present invention;
FIG. 5 is a structure diagram 4 of a system for establishing a dedicated bearer according to embodiments of the present invention;
FIG. 6 is a schematic diagram 1 of a dedicated bearer according to embodiments of the present invention;
FIG. 7 is a schematic diagram 2 of a dedicated bearer according to embodiments of the present invention;
FIG. 8 is a schematic diagram 3 of a dedicated bearer according to embodiments of the present invention;
FIG. 9 is a flowchart of a method for establishing a dedicated bearer according to optional embodiments of the present invention;
FIG. 10 is a flowchart of a process in which a bearer network establishes a dedicated bearer according to optional embodiments of the present invention;
FIG. 11 is a flowchart 1 of a process of establishing a dedicated bearer when a UE1 initiates establishment of the dedicated bearer according to optional embodiments of the present invention;
FIG. 12 is a flowchart 2 of a process of establishing a dedicated bearer when a UE1 initiates establishment of the dedicated bearer according to optional embodiments of the present invention;
FIG. 13 is a flowchart 1 of a registration process of a transparent call according to optional embodiments of the present invention;
FIG. 14 is a flowchart 2 of a registration process of a transparent call according to optional embodiments of the present invention;
FIG. 15 is a flowchart of a process of a transparent call in conjunction with a NAT traversal server according to optional embodiments of the present invention;
FIG. 16 is a flowchart of a process of an ALG-based transparent call according to optional embodiments of the present invention;
FIG. 17 is a flowchart of a calling process of a transparent call according to optional embodiments of the present invention;
FIG. 18 is a flowchart of a called process of a transparent call according to optional embodiments of the present invention;
FIG. 19 is a flowchart of a calling process of a convergence device call according to optional embodiments of the present invention;
FIG. 20 is a flowchart of a called process of a convergence device call according to optional embodiments of the present invention;
FIG. 21 is a schematic diagram of a user equipment and its position in a system for establishing a dedicated bearer according to optional embodiments of the present invention; and
FIG. 22 is a flowchart of a process in which an external application supports QoS according to embodiments of the present invention.

### DETAILED DESCRIPTION

The present invention will be described hereinafter in detail with reference to the accompanying drawings in connection with the embodiments. It is to be noted that if not in collision, the embodiments and features therein in the present application may be combined with each other.

Other features and advantages of the present invention will be elaborated hereinafter in the description, and moreover, partially become apparent from the description, or will be understood through implementation of the present invention. The object and other advantages of the present invention may be achieved and obtained through structures set forth in the description, claims and drawings.

The solutions in embodiments of the present invention will be described clearly and completely in connection with the accompanying drawings in embodiments of the present invention from which the solutions will be apparent to those skilled in the art. The embodiments described below are part, not all, of embodiments of the present invention. Based on the embodiments described herein, other embodiments obtained by those skilled in the art on the premise that no creative work is done are within the scope of the present invention.

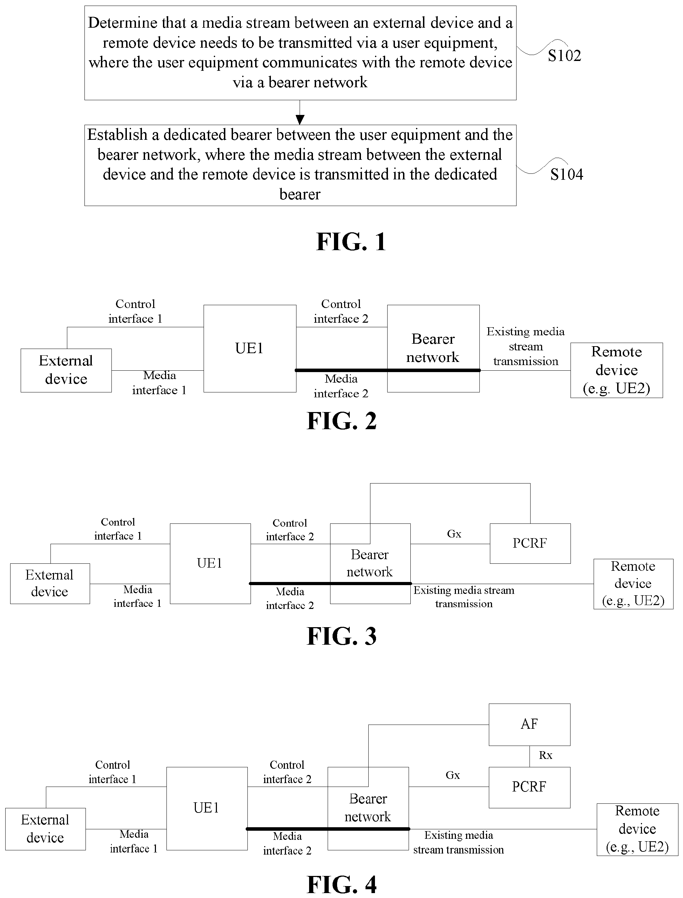

Embodiments of the present invention provide a method for establishing a dedicated bearer. FIG. 1 is a flowchart of a method for establishing a dedicated bearer according to embodiments of the present invention. As illustrated in FIG. 1, the method includes steps described below.

In step S102, it is determined that a media stream between an external device and a remote device needs to be transmitted via a user equipment, where the user equipment communicates with the remote device via a bearer network.

In step S104, a dedicated bearer is established between the user equipment and the bearer network, where the media stream between the external device and the remote device is transmitted in the dedicated bearer.

Through the above steps, when it is determined that a media stream between an external device and a remote device needs to be transmitted via a user equipment, a dedicated bearer is established between the user equipment and a bearer network. As compared to a problem in which QoS cannot be assured for services of an external device because QoS cannot be controlled on a default bearer in the related art, the above steps in embodiments of the present invention allow QoS to be controlled for a media stream between the external device and a remote device, solve the problem in which the requirement on QoS of the media stream on the external device cannot be assured, and assure, through a dedicated bearer, QoS for transmission of the media stream of the external device.

Optionally, the step in which it is determined that the media stream between the external device and the remote device needs to be transmitted via the user equipment includes that the user equipment receives a media description or a bearer resource modification request of the external device; and the user equipment determines, according to the media description or the bearer resource modification request, that the media stream between the external device and the remote device needs to be transmitted via the user equipment.

Optionally, before the user equipment receives the media description of the external device, the user equipment sends a media description query request or a call request of the remote device to the external device.

Optionally, the step in which it is determined that the media stream between the external device and the remote device needs to be transmitted via the user equipment includes that the user equipment receives a preset message of the external device, where the preset message includes one of the following: a call request, a registration request, a call response and a media description query response, and the preset message carries the media description/the bearer resource modification request; and the user equipment determines, according to the preset message, that the media stream between the external device and the remote device needs to be transmitted via the user equipment.

Optionally, the step in which the dedicated bearer is established between the user equipment and the bearer network includes that the user equipment sends the bearer resource modification request to the bearer network, where the bearer resource modification request is used for requesting to establish the dedicated bearer.

Optionally, the step in which the dedicated bearer is established between the user equipment and the bearer network includes that the user equipment sends the bearer resource modification request to a P-GW of the bearer network; the P-GW interacts with a PCRF; the PCRF triggers a process in which the bearer network establishes the dedicated bearer; and the bearer network establishes the dedicated bearer.

Optionally, the step in which the dedicated bearer is established between the user equipment and the bearer network includes that the user equipment sends the bearer resource modification request to a PCRF of the bearer network; the PCRF triggers a process in which the bearer network establishes the dedicated bearer; and the bearer network establishes the dedicated bearer.

Optionally, the step in which it is determined that the media stream between the external device and the remote device needs to be transmitted via the user equipment includes that the bearer network receives a media description of the external device; and the bearer network determines, according to the media description, that the media stream between the external device and the remote device needs to be transmitted via the user equipment.

Optionally, the step in which the dedicated bearer is established between the user equipment and the bearer network includes that an AF of the bearer network receives a call request sent by the user equipment; the AF interacts with a PCRF; the PCRF triggers a process in which the bearer network establishes the dedicated bearer; and the bearer network establishes the dedicated bearer.

Embodiments of the present invention further provide an apparatus for establishing a dedicated bearer, which is configured to implement the above-mentioned embodiments and optional implementations. What has been described will not be repeated. Modules involved in the apparatus will be described below. As used below, the term "module" is implemented by a combination of software and/or hardware capable of implementing preset functions. The apparatus described in the following embodiment is preferably implemented by software, but implementation by software or a combination of software and hardware is also possible and conceived.

The apparatus for establishing a dedicated bearer is applied to a user equipment and includes: a determining module, which is configured to determine that a media stream between an external device and a remote device needs to be transmitted via a user equipment, where the user equipment communicates with the remote device via a bearer network; and an establishing module, which is configured to establish a dedicated bearer between the user equipment and the bearer network, where the media stream between the external device and the remote device is transmitted in the dedicated bearer.

Optionally, the determining module includes: a receiving unit, which is configured to receive a media description or a bearer resource modification request of the external device; and a determining unit, which is configured to determine, according to the media description or the bearer resource modification request, that the media stream between the external device and the remote device needs to be transmitted via the user equipment.

Optionally, the apparatus further includes: a sending module, which is configured to send a media description query request or a call request of the remote device to the external device.

Optionally, the receiving unit is configured to receive a preset message of the external device, where the preset message includes one of the following: a call request, a registration request, a call response and a media description query response, and the preset message carries the media description/the bearer resource modification request; and the determining unit is configured to determine, according to the preset message, that the media stream between the external device and the remote device needs to be transmitted via the user equipment.

Optionally, the establishing module is configured to send the bearer resource modification request to the bearer network, where the bearer resource modification request is used for requesting to establish the dedicated bearer.

Embodiments of the present invention further provide an apparatus for establishing a dedicated bearer. The apparatus is applied to a bearer network and includes: a determining module, which is configured to determine a media stream that needs to be transmitted between an external device and a remote device via a user equipment, where the user equipment communicates with the remote device via a bearer network; and an establishing module, which is configured to establish a dedicated bearer between the user equipment and the bearer network, where the media stream between the external device and the remote device is transmitted in the dedicated bearer.

Optionally, the determining module includes: a receiving unit, which is configured to receive a media description of the external device; and a determining unit, which is configured to determine, according to the media description, that the media stream between the external device and the remote device needs to be transmitted via the user equipment.

Embodiments of the present invention further provide a user equipment that includes the above-mentioned apparatus for establishing a dedicated bearer.

Additionally, various function units in embodiments of the present invention may be integrated into one processing unit, or each function unit may be physically present separately, or two or more function units may be integrated into one unit. The integrated unit may be implemented by hardware or a software function unit.

FIG. 2 is a structure diagram 1 of a system for establishing a dedicated bearer according to embodiments of the present invention. As illustrated in FIG. 2, embodiments of the present invention involve the entities described below.

A user equipment (UE) is a terminal device with a communication capability, such as a smart phone, a tablet computer, a notebook computer or another smart user device.

An external device is also referred to as a convergence communication device in embodiments of the present invention, and has a multimedia capability and a communication capability.

A bearer network is a bearer network where the UE accesses an external network that includes, but not limited to, a 3G network/a 4G network and another network that further evolves (e.g., the fifth generation of communication technology (5G)). For a 4G network, the bearer network includes an eNodeB, a mobility management entity (MME), a sever gateway (S-GW) and a packet data network gateway (P-GW).

A remote device is a peer device that establishes a call with the UE (or external device), and may be another UE or a media server.

In embodiments of the present invention, the "media stream that is between the external device and the remote device and transmitted via the user equipment", i.e., plug-in media stream, is a media stream that is established between the external device and the remote device but passes the UE from the perspective of network transmission. For example, the UE, which serves as a 3G/4G/5G wireless router, provides a Wi-Fi hotspot (or another wireless access point such as bluetooth and near field communication (NFC)), and allocates a wireless local area network (WLAN) address to the external device. The external device interacts with the external network through the Wi-Fi hotspot of the UE. The UE carries the network transmission of the external device on the 3G/4G/5G of the UE.

Referring to FIG. 2, to implement the above steps in embodiments of the present invention, network interfaces that may be added or utilized include the interfaces described below.

A control interface 1 is a control interface between the UE and the convergence communication device. The control interface 1 is used for transmitting a media description between the UE and an external device. Optionally, the control interface 1 may be further used for establishment indication of a bearer channel and status of the bearer channel. Control signaling in the control interface 1 may be carried on various network connections such as bluetooth, WLAN and NFC between the UE and the external device.

The media description can be carried in an existing call request (e.g., INVITE request) without additional signaling extension. This mode is defined as a transparent call mode. The media description may also be transmitted through a signaling path other than the call request, e.g., by use of a convergence device mode. The convergence device mode will be explained later in description of embodiments of the present invention.

A control interface 2 is a control interface between the UE and the bearer network, and is used for a bearer resource modification request.

A media interface 1 is a media interface for transmitting the media stream between the external device and the UE.

A media interface 2 is a media interface for transmitting the media stream between the UE and the bearer network. The transmission of the media stream at the media interface 2 will use a QoS-assured transmission. That is, the media stream is transmitted using a dedicated bearer.

An existing media interface is a media interface between the bearer network and the remote device. The media interface is an existing interface in the related art and may not be changed.

FIG. 3 is a structure diagram 2 of a system for establishing a dedicated bearer according to embodiments of the present invention. FIG. 3 illustrates an evolution of FIG. 2. If the UE cannot use the mode of FIG. 2 to interact with a dedicated bearer, the UE can use a mode of FIG. 3.

As illustrated in FIG. 3, a policy and charging rules function (PCRF) is used in this system to interact with a bearer network to control QoS.

The PCRF includes a Visited-PCRF (V-PCRF) and a Home-PCRF (H-PCRF). Generally, a UE first interacts with the V-PCRF. When the V-PCRF cannot make a confirmation, e.g., can make a confirmation only in conjunction with user subscription data, the V-PCRF interacts with the H-PCRF to make a confirmation.

In a system architecture illustrated in FIG. 3, a mapping between a media interface 1 and a media interface 2 is established, and the dedicated bearer is established at the media interface 2.

As illustrated in FIG. 3, the system further includes the interfaces described below.

A control interface 2 is a control interface between the UE and the PCRF, and is used by the UE to request a bearer modification from the PCRF to establish the bearer. This control interface 2 has a function similar to that of the control interface 2 of FIG. 2, but this control interface 2 and the control interface 2 of FIG. 2 are different in adopted signaling and transmission paths.

A Gx interface is an interface between the PCRF and the bearer network, which is an existing interface in the related art.

FIG. 4 is a structure diagram 3 of a system for establishing a dedicated bearer according to embodiments of the present invention. FIG. 4 illustrates an evolution of FIG. 3. By using a system architecture illustrated in FIG. 4, a network (i.e., bearer network) can directly trigger establishment of a dedicated bearer.

As illustrated in FIG. 4, an application function (AF) is used for receiving application layer signaling of a UE and interacts with a PCRF to modify a bearer.

In the system architecture illustrated in FIG. 4, a mapping between a media interface 1 and a media interface 2 is established, and the dedicated bearer is established at the media interface 2.

As illustrated in FIG. 4, the system further includes the interfaces described below.

A control interface 2 is an interface between the UE and the AF. The AF obtains a media description from signaling in interaction between the AF and the UE.

An Rx interface is an interface between the AF and the PCRF, which is an existing interface in the related art.

As a 3G/4G/5G wireless router and a Wi-Fi hotspot, the UE allocates a WLAN address to an external device. In Internet Protocol version 4 (IPv4), the UE also needs to perform a NAT function, which is not required in Internet Protocol version 6 (IPv6). If the UE provides an application layer gateway (ALG) for a media stream, the external device may not need to consider NAT traversal; otherwise, the external device also needs to consider the NAT traversal.

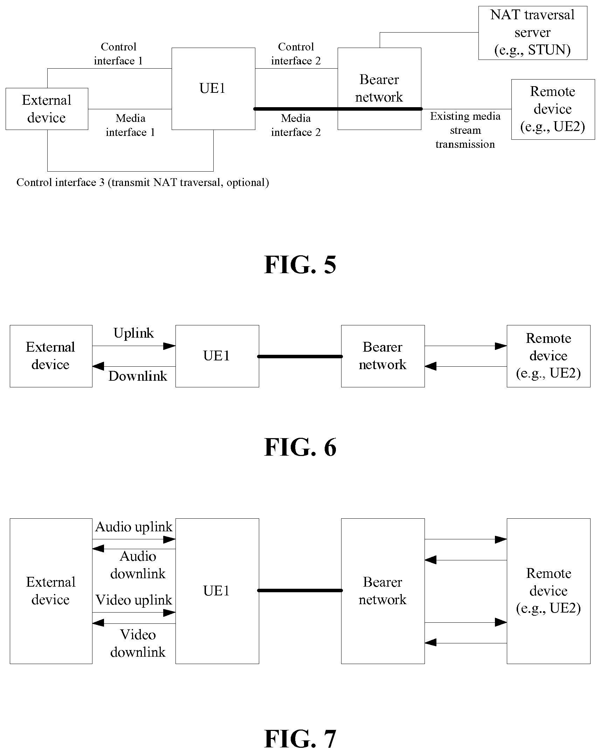

FIG. 5 is a structure diagram 4 of a system for establishing a dedicated bearer according to embodiments of the present invention. FIG. 5 illustrates an evolution of FIG. 2. To achieve NAT traversal of an external device, a NAT traversal server is used in the system illustrated in FIG. 5.

The NAT traversal server is a server that serves the NAT traversal, such as a Simple Traversal of UDP over NATs (STUN) server and a Traversal Using Relays around NAT (TURN) server. For a mode in which Interactive Connectivity Establishment (ICE) traverses NAT, and both STUN and TURN protocols are needed, two or more NAT traversal servers may exist.

In a system architecture illustrated in FIG. 5, a mapping between a media interface 1 and a media interface 2 is established, and a dedicated bearer is established at the media interface 2.

As illustrated in FIG. 5, the system further includes the interface described below.

A control interface 3 is located between a UE and the NAT traversal server and used by the external device to traverse NAT, and packets of the external device pass the NAT (UE) and a bearer network.

A dedicated bearer established in embodiments of the present invention is described below.

FIG. 6 is a schematic diagram 1 of a dedicated bearer according to embodiments of the present invention. As illustrated in FIG. 6, one dedicated bearer is used on an uplink and a downlink of a media stream. An m line (corresponding to one media stream) in a Session Description Protocol (SDP), such as audio, may have an uplink (a media stream from an external device to a remote device) and a downlink (a media stream from the remote device to the external device). The two streams are on one dedicated bearer.

FIG. 7 is a schematic diagram 2 of a dedicated bearer according to embodiments of the present invention. As illustrated in FIG. 7, multiple media streams may use a same dedicated bearer. For multiple m lines in an SDP, such as audio and video, audio and video media streams are on one dedicated bearer.

The SDP may make an indication explicitly, or implicitly indicate that one stream is used by default.

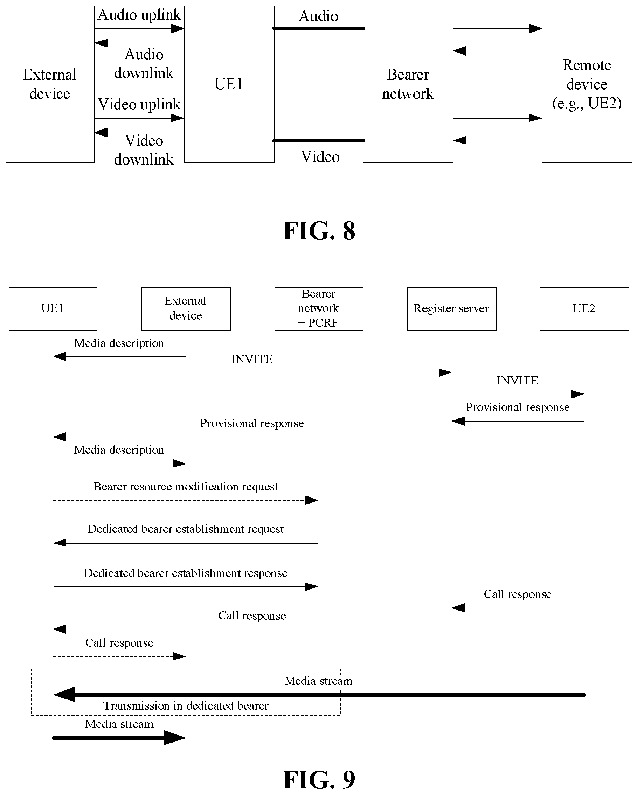

FIG. 8 is a schematic diagram 3 of a dedicated bearer according to embodiments of the present invention. As illustrated in FIG. 8, multiple media streams use multiple dedicated bearers, where each media stream uses one dedicated bearer. For multiple m lines in an SDP, such as audio and video, audio and video media streams are in different dedicated bearers.

The SDP needs to make an indication explicitly. For example, if a UE requests to establish dedicated bearers, the UE needs to request to establish dedicated bearers for different groups (one media stream or multiple media streams may be transmitted in one group) and a bearer network establishes the dedicated bearers to make each group use one dedicated bearer; if the bearer network actively initiates establishment of dedicated bearers, the bearer network needs to establish dedicated bearers to make each group use one dedicated bearer.

The method illustrated in FIG. 1 is described below with reference to optional embodiments.

FIG. 9 is a flowchart of a method for establishing a dedicated bearer according to optional embodiments of the present invention. FIG. 9 illustrates a variation of FIG. 1. As illustrated in FIG. 9, the method includes the steps described below.

In step S902, an external device sends a media description to a UE1.

The external device may actively send a call request, where the call request carries the media description. Alternatively, the UE1 may send a media description query request to the external device before the step S902. The call request sent actively by the external device may be an INVITE request or an extended message like a convergence device.

In step S904, the UE1 sends a call request to a register server.

In a case of the system architecture illustrated in FIG. 4, the call request may be sent to an AF, e.g., a Proxy-Call Session Control Function (P-CSCF).

In step S906, the register server forwards the call request to a remote device (i.e., UE2).

In step S908, the UE2 returns a provisional response that may carry the media description of the UE2.

In step S910, the register server forwards the provisional response to the UE1.

In step S912, if the provisional response carries the media description, the UE1 sends the media description in the provisional response to the external device. A message that carries the media description may be a provisional response message or an extended message like a convergence device.

In step S914, if the UE1 initiates establishment of a dedicated bearer, this step is performed. The UE1 initiates a bearer resource modification request. If the UE1 supports the control interface 2 of the system of FIG. 2, the message is sent to a P-GW of the bearer network. If the UE1 supports the system of FIG. 3, the message is sent to a PCRF. If a network (i.e., the bearer network) initiates establishment of the dedicated bearer (i.e., the system of FIG. 4 is adopted), the step S914 is skipped.

In step S916, if the bearer network initiates establishment of the dedicated bearer, the bearer network sends a dedicated bearer establishment request message to the UE1. If the network (i.e., the bearer network) initiates establishment of the dedicated bearer (i.e., the system of FIG. 4 is adopted), the AF interacts with the PCRF and the PCRF interacts with other entities in the bearer network to complete establishment of the dedicated bearer.

In step S918, the UE1 returns a dedicated bearer establishment response to the bearer network. In this case, the dedicated bearer has been established and the UE1 has been notified that establishment of the dedicated bearer is completed.

In step S920, the UE2 sends a call response to the register server.

In step S922, the register server forwards the call response to the UE1.

In step S924, optionally, the UE1 sends the call response (or call response notification) to the external device.

At this point, a media plane is established between the external device and the UE2; and transmission between the UE1 and the bearer network is the dedicated bearer that supports QoS. It is to be noted that FIG. 9 uses a media stream from the remote device (UE2) to the UE1 as an example to describe forwarding of the media stream by the dedicated bearer and the UE1. In practice, media streams in both an uplink direction and a downlink direction may exist.

In addition, the order of the above steps is not fixed, and in some cases, the above steps may be executed in a different order. To adapt to execution in different orders, the above steps may be appropriately modified or supplemented. For example, as an alternative to the process in which the UE1 sends the bearer resource modification request and correspondingly the dedicated bearer is established, the bearer resource modification request may also be sent after the UE1 receives the call response. In this case, the dedicated bearer may not be established before a called user rings.

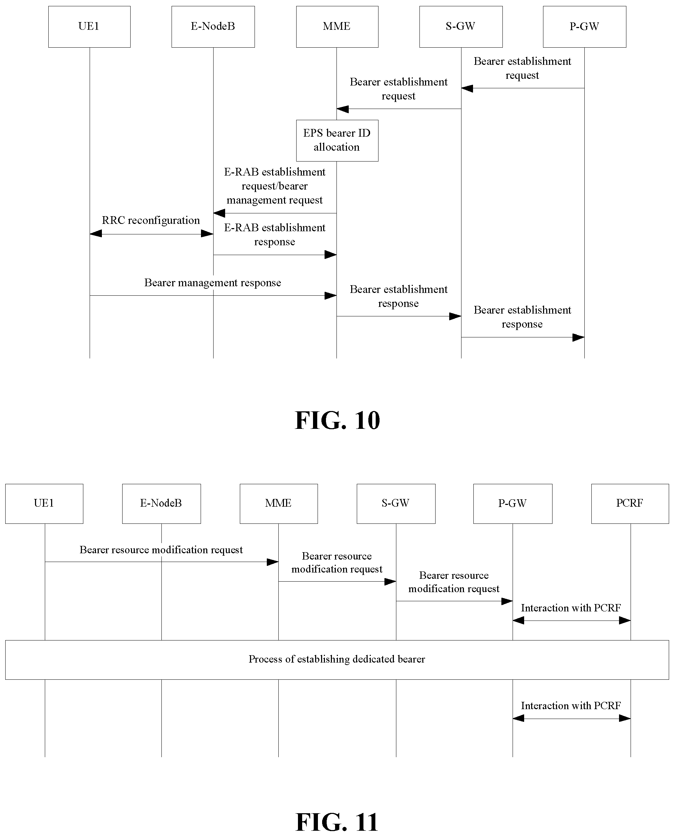

In an example of 4G, the bearer network includes an eNodeB, an MME, an S-GW and a P-GW. FIG. 10 is a flowchart of a process in which a bearer network establishes a dedicated bearer according to optional embodiments of the present invention. As illustrated in FIG. 10, the process in which a bearer network establishes a dedicated bearer includes the steps described below.

In step S1002, a P-GW sends a bearer establishment request to an S-GW. Generally, a PCRF triggers the P-GW to send the bearer establishment request.

In step S1004, the S-GW sends the bearer establishment request to an MME.

In step S1006, the MME allocates a bearer identity (ID).

In step S1008, the MME sends an Evolved Universal Terrestrial Radio Access Network (E-UTRAN) Radio Access Bearer (E-RAB) establishment request/bearer management request to an eNodeB.

In step S1010, the eNodeB interacts with a UE1 to perform Radio Resource Control (RRC) reconfiguration.

In step S1012, the eNodeB sends an E-RAB establishment response to the MME.

In step S1014, the UE1 sends a bearer management response to the MME.

In step S1016, the MME sends a bearer establishment response to the S-GW.

In step S1018, the S-GW sends the bearer establishment response to the P-GW.

A process of establishing a dedicated bearer when a UE1 initiates establishment of the dedicated bearer is described below.

FIG. 11 is a flowchart 1 of a process of establishing a dedicated bearer when a UE1 initiates establishment of the dedicated bearer according to optional embodiments of the present invention. The process is applied to the system architecture of FIG. 2. As illustrated in FIG. 11, the process includes the steps described below.

In step S1102, a UE1 sends a bearer resource modification request to an MME.

In step S1104, the MME sends the bearer resource modification request to an S-GW.

In step S1106, the S-GW sends the bearer resource modification request to a P-GW.

In step S1108, the P-GW interacts with a PCRF.

In step S1110, the PCRF triggers the process of establishing a dedicated bearer with reference to the process illustrated in FIG. 10.

In step S1112, after the establishment is completed, the P-GW interacts with the PCRF and notifies the PCRF of the establishment situation.

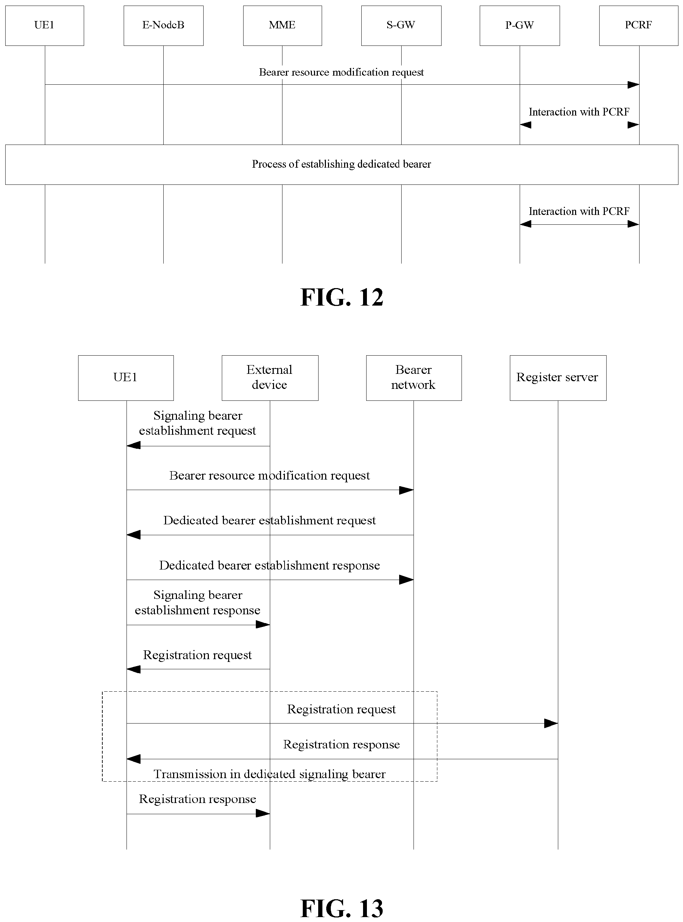

FIG. 12 is a flowchart 2 of a process of establishing a dedicated bearer when a UE1 initiates establishment of the dedicated bearer according to optional embodiments of the present invention. The process is applied to the system architecture of FIG. 3. As illustrated in FIG. 12, the process includes the steps described below.

In step S1202, a UE1 sends a bearer resource modification request to a PCRF.

In the related art, the UE1 may be unable to open the bearer resource modification request capability in the mode illustrated in FIG. 11 to an application layer, especially to an application other than an IP multimedia subsystem (IMS). Therefore, in the system architecture illustrated in FIG. 12, the PCRF may open one interface to directly receive the bearer resource modification request of the UE1. This interface may be applied to both a media stream of a built-in application of the UE1 and a plug-in media stream.

In step S1204, the PCRF interacts with a P-GW.

In step S1206, the PCRF triggers the process of establishing a dedicated bearer with reference to the process illustrated in FIG. 10.

In step S1208, after the establishment is completed, the P-GW interacts with the PCRF and notifies the PCRF of the establishment situation.

By use of the method for establishing a dedicated bearer illustrated in FIG. 1, embodiments of the present invention provide a method for establishing a dedicated bearer in a registration process. In the registration process, a registration process of a transparent call may be adopted, and a registration process of a convergence device communication may also be adopted.

The transparent call means that both signaling and a media stream are terminated on an external device. For example, a UE1 only serves as a wireless router that provides Wi-Fi. For the external device, the UE1 may be regarded as transparent.

Embodiments of the present invention provide a registration process of a transparent call. In the registration process, an external device sends a signaling bearer establishment request to a UE1. FIG. 13 is a flowchart 1 of a registration process of a transparent call according to optional embodiments of the present invention. As illustrated in FIG. 13, the process includes the steps described below.

In step S1302, an external device sends a signaling bearer establishment request to a UE1 (to trigger the UE1 to send a bearer resource modification request to a bearer network).

In step S1304, the UE1 sends the bearer resource modification request to the bearer network. Alternatively, the external device sends the bearer resource modification request to the UE1, and the UE1 forwards the bearer resource modification request to the bearer network.

In step S1306, the bearer network sends a dedicated bearer establishment request to the UE1.

In step S1308, the UE1 sends a dedicated bearer establishment response to the bearer network.

In step S1310, the UE1 sends a signaling bearer establishment response (equivalent to the dedicated bearer establishment response) to the external device. At this point, establishment of a dedicated bearer is completed.

In step S1312, the external device sends a registration request to the UE1 in the first hop.

In step S1314, the UE1 forwards the registration request to a register server, where the registration request is transmitted in the dedicated bearer.

In step S1316, the register server forwards a registration response to the UE1, where the registration response is transmitted in the dedicated bearer.

In step S1318, the UE1 forwards the registration response to the external device.

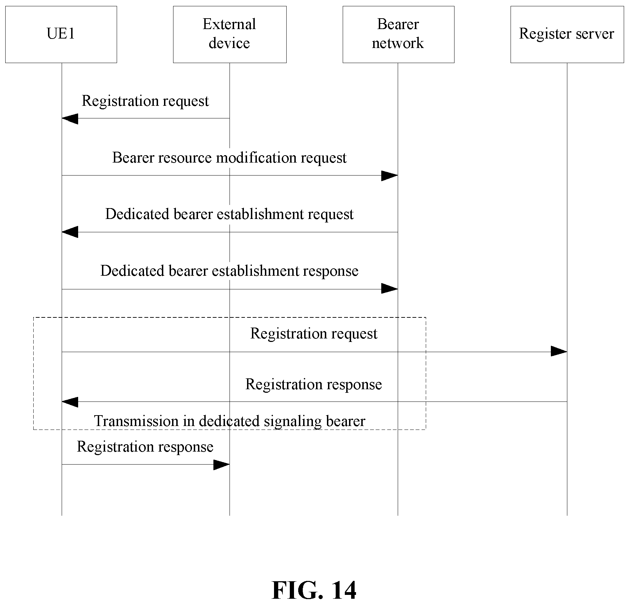

Embodiments of the present invention further provide a registration process of another transparent call. In this registration process, an external device sends a registration request to a UE1. FIG. 14 is a flowchart 2 of a registration process of a transparent call according to optional embodiments of the present invention. As illustrated in FIG. 14, the process includes the steps described below.

In step S1402, an external device sends a registration request to a UE1 in the first hop.

In step S1404, the UE1 sends a bearer resource modification request to a bearer network.

In step S1406, the bearer network sends a dedicated bearer establishment request to the UE1.

In step S1408, the UE1 sends a dedicated bearer establishment response to the bearer network. At this point, establishment of a dedicated bearer is completed.

In step S1410, the UE1 forwards the registration request to a register server, where the registration request is transmitted in the dedicated bearer.

In step S1412, the register server sends a registration response to the UE1, where the registration response is transmitted in the dedicated bearer.

In step S1414, the UE1 forwards the registration response to the external device.

It can be seen from a comparison between the registration process in FIG. 13 and the registration process in FIG. 14 that the external device may send the registration request to the bearer network either before the dedicated bearer is established or after the dedicated bearer is established.

As mentioned in the above process, the system architecture illustrated in FIG. 5 may be adopted to implement packet NAT traversal. It is to be noted that what is highlighted in FIG. 5 is a system architecture when a NAT traversal server exists, and this system architecture may be an improvement to any one of FIGS. 2 to 4.

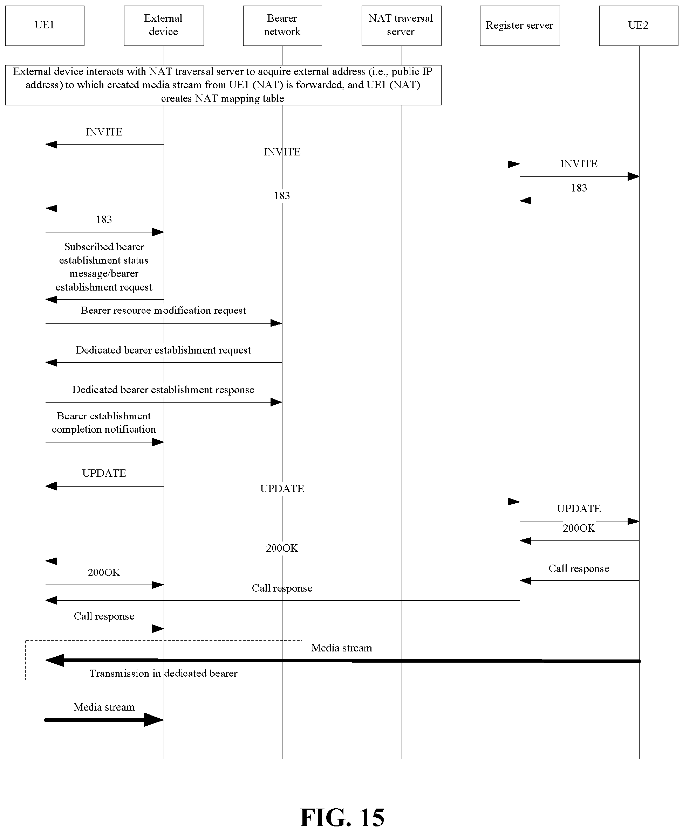

The following uses a system architecture that is a combination of FIG. 2 and FIG. 5 to describe a transparent call process in conjunction with a NAT traversal server. FIG. 15 is a flowchart of a process of a transparent call in conjunction with a NAT traversal server according to optional embodiments of the present invention. As illustrated in FIG. 15, the process includes the steps described below.

In step S1502, an external device interacts with a NAT traversal server to acquire an external address (i.e., public IP address) to which a created media stream from a UE1 (NAT) is forwarded, and the UE1 (NAT) creates a NAT mapping table.

In step S1504, the external device sends an INVITE request (call request), where a media description uses the external address acquired in the step S1502; and the message is sent to the UE1 in the first hop.

In step S1506, the UE1 forwards the INVITE request to a register server.

In step S1508, the register server forwards the INVITE request to a UE2 (i.e., remote device).

In step S1510, the UE2 sends a provisional response 183 that carries the media description of the UE2.

In step S1512, the register server forwards the provisional response 183 to the UE1.

In step S1514, the UE1 forwards the provisional response 183 to the external device.

In step S1516, if bearer establishment is triggered by the UE1, the external device sends a subscribed bearer establishment status message. If bearer establishment is triggered by the external device, the external device sends a bearer establishment request.

In step S1518, the UE1 sends a bearer resource modification request to a bearer network.

In step S1520, the bearer network sends a dedicated bearer establishment request to the UE1.

In step S1522, the UE1 sends a dedicated bearer establishment response to the bearer network.

In step S1524, the UE1 sends a bearer establishment completion notification to the external device. At this point, establishment of a dedicated bearer is completed.

In step S1526, the external device sends an UPDATE command which is then forwarded by an intermediate network element to the UE2.

In step S1528, the UE2 returns a success message (200 OK) which is then forwarded by the intermediate network element to the external device.

In step S1530, the UE2 returns a call response which is then forwarded by the intermediate network element to the external device.

In step S1532, a media stream is established. This media stream is between the UE1 and the bearer network and is transmitted in the dedicated bearer.

It is to be noted that, to illustrate a forwarding relationship, FIG. 15 depicts only a downlink direction. In practice, both uplink and downlink directions exist. Moreover, since conjunction with NAT is relatively independent, the following embodiments will not be described in conjunction with NAT.

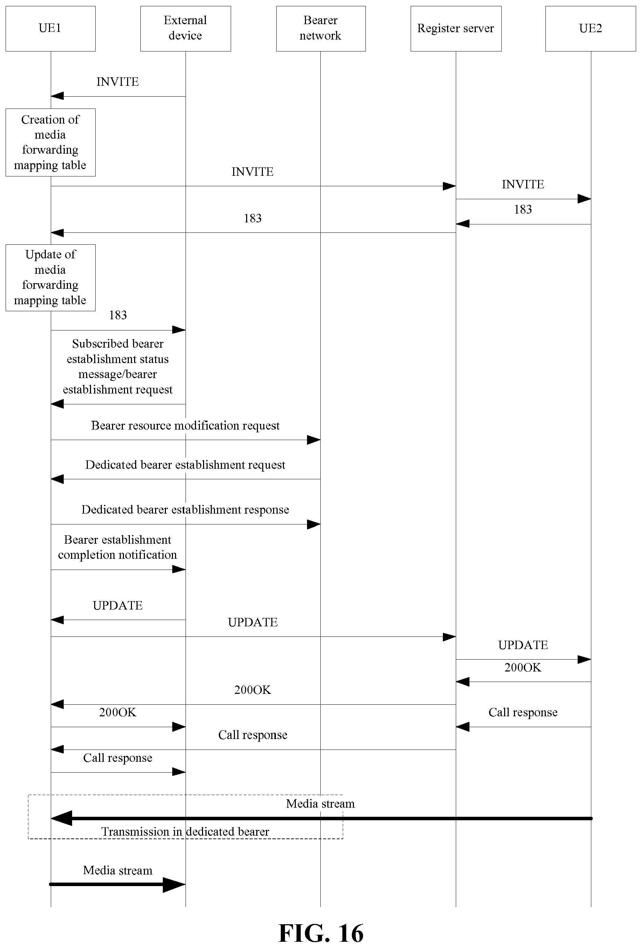

When the UE1 has an ALG function, a NAT function may not need to be implemented through the NAT traversal server. FIG. 16 is a flowchart of a process of an ALG-based transparent call according to optional embodiments of the present invention. As illustrated in FIG. 16, the process includes the steps described below.

In step S1602, an external device sends an INVITE request. A media description is an intranet address, i.e., an address allocated by a UE to the external device. The message is sent to the UE in the first hop.

In step S1604, a UE1 creates a media forwarding mapping table according to the received INVITE request.

In step S1606, the UE1 forwards the INVITE request to a register server.

In step S1608, the register server forwards the INVITE request to a UE2.

In step S1610, the UE2 sends a provisional response 183 that carries the media description of the UE2.

In step S1612, the register server forwards the provisional response 183 to the UE1.

In step S1614, the UE1 updates the media forwarding mapping table.

In step S1616, the UE1 forwards the provisional response 183 to the external device.

In step S1618, if bearer establishment is triggered by the UE1, the external device sends a subscribed bearer establishment status message. If bearer establishment is triggered by the external device, the external device sends a bearer establishment request.

In step S1620, the UE1 sends a bearer resource modification request to a bearer network.

In step S1622, the bearer network sends a dedicated bearer establishment request to the UE1.

In step S1624, the UE1 sends a dedicated bearer establishment response to the bearer network.

In step S1626, the UE1 sends a bearer establishment completion notification is completed to the external device. At this point, establishment of a dedicated bearer is completed.

In step S1628, the external device sends UPDATE which is then forwarded by an intermediate network element to the UE2.

In step S1630, the UE2 returns 200 OK which is then forwarded by the intermediate network element to the external device.

In step S1632, the UE2 returns a call response which is then forwarded by the intermediate network element to the external device.

In step S1634, a media stream is established. This media stream is between the UE1 and the bearer network and is transmitted in the dedicated bearer. The UE1 performs an ALG behavior and forwards the media between an intranet and an extranet according to the media forwarding mapping table.

It is to be noted that, to illustrate a forwarding relationship, FIG. 16 depicts only a downlink direction. In practice, both uplink and downlink directions exist. Moreover, since conjunction with ALG is relatively independent, the following embodiments will not be described in conjunction with ALG.

A calling process and a called process of an external device in are described terms of a transparent call process and a convergence device call process.

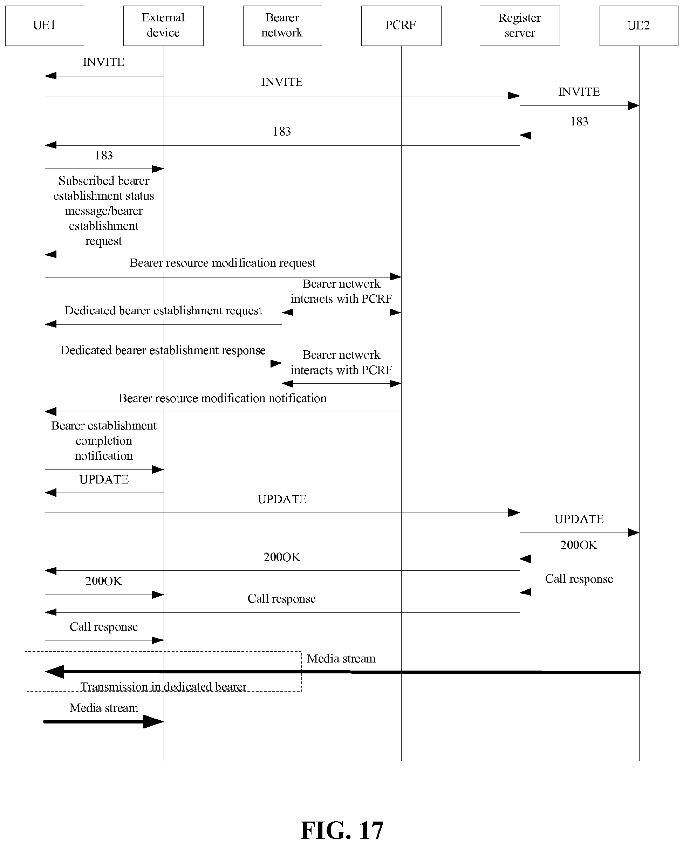

Embodiments of the present invention provide a calling process of a transparent call in conjunction with the system architecture of FIG. 3. FIG. 17 is a flowchart of a calling process of a transparent call according to optional embodiments of the present invention. As illustrated in FIG. 17, the process includes the steps described below.

In step S1702, an external device sends an INVITE request to a UE1 in the first hop.

In step S1704, the UE1 forwards the INVITE request to a register server.

In step S1706, the register server forwards the INVITE request to a UE2.

In step S1708, the UE2 sends a provisional response 183 that carries a media description of the UE2.

In step S1710, the register server forwards the provisional response 183 to the UE1.

In step S1712, the UE1 forwards the provisional response 183 to the external device.

In step S1714, if bearer establishment is triggered by the UE1, the external device sends a subscribed bearer establishment status message. If bearer establishment is triggered by the external device, the external device sends a bearer establishment request.

In step S1716, the UE1 sends a bearer resource modification request to a PCRF.

In step S1718, the PCRF interacts with a bearer network.

In step S1720, the bearer network sends a dedicated bearer establishment request to the UE1.

In step S1722, the UE1 sends a dedicated bearer establishment response to the bearer network.

In step S1724, the bearer network interacts with the PCRF.

In step S1726, the PCRF sends a bearer resource modification notification to the UE1.

In step S1728, the UE1 sends a bearer establishment completion notification to the external device. At this point, establishment of a dedicated bearer is completed.

In step S1730, the external device sends UPDATE which is then forwarded by an intermediate network element to the UE2.

In step S1732, the UE2 returns 200 OK which is then forwarded by the intermediate network element to the external device.

In step S1734, the UE2 returns a call response which is then forwarded by the intermediate network element to the external device.

In step S1736, a media stream is established. This media stream is between the UE and the bearer network and is transmitted in the dedicated bearer.

It is to be noted that, to illustrate a forwarding relationship, FIG. 17 depicts only a downlink direction. In practice, both uplink and downlink directions exist.

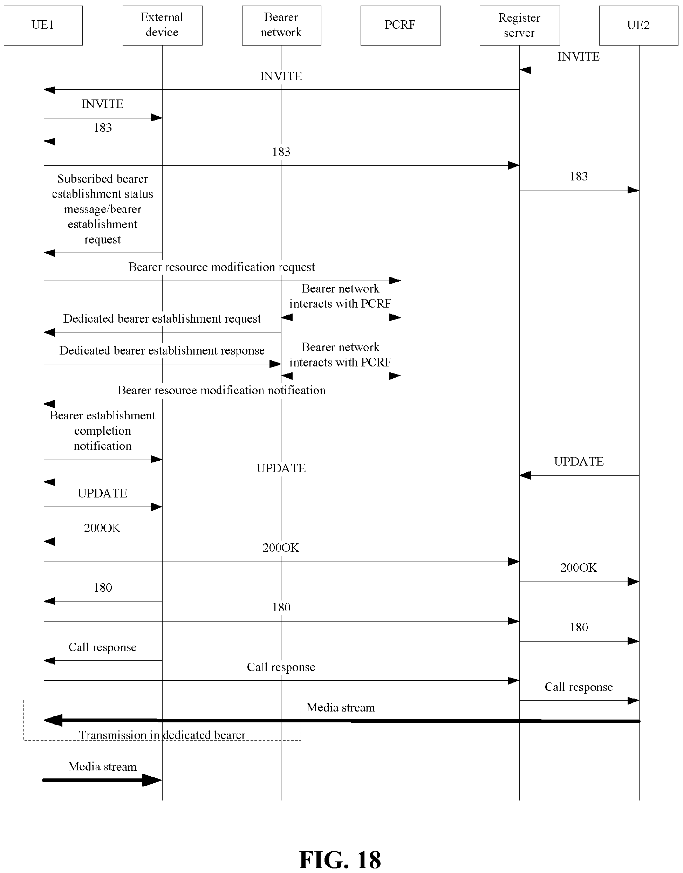

Embodiments of the present invention provide a called process of a transparent call in conjunction with the system architecture of FIG. 3. FIG. 18 is a flowchart of a called process of a transparent call according to optional embodiments of the present invention. As illustrated in FIG. 18, the process includes the steps described below.

In step S1802, a UE2 sends an INVITE request to a register server.

In step S1804, the register server forwards the INVITE request to a UE1.

In step S1806, the UE1 forwards the INVITE request to an external device.

In step S1808, the external device sends a provisional response 183 that carries a media description of the external device.

In step S1810, the UE1 forwards the provisional response 183 to the register server.

In step S1812, the register server forwards the provisional response 183 to the UE2.

In step S1814, if bearer establishment is triggered by the UE1, the external device sends a bearer establishment status subscription message. If bearer establishment is triggered by the external device, the external device sends a bearer establishment request.

In step S1816, the UE1 sends a bearer resource modification request to a PCRF.

In step S1818, the PCRF interacts with a bearer network.

In step S1820, the bearer network sends a dedicated bearer establishment request to the UE1.

In step S1822, the UE1 sends a dedicated bearer establishment response to the bearer network.

In step S1824, the bearer network interacts with the PCRF.

In step S1826, the PCRF sends a bearer resource modification notification to the UE1.

In step S1828, the UE1 sends a bearer establishment completion notification to the external device.

In step S1830, the UE2 returns UPDATE which is then forwarded by an intermediate network element to the external device.

In step S1832, the external device returns 200 OK which is then forwarded by the intermediate network element to the UE2.

In step S1834, the external device returns a user ring 180 which is then forwarded by the intermediate network element to the UE2.

In step S1836, the external device returns a call response which is then forwarded by the intermediate network element to the UE2.

In step S1838, a media stream is established. This media stream is between the UE and the bearer network and is transmitted in a dedicated bearer.

It is to be noted that, to illustrate a forwarding relationship, FIG. 18 depicts only a downlink direction. In practice, both uplink and downlink directions exist.

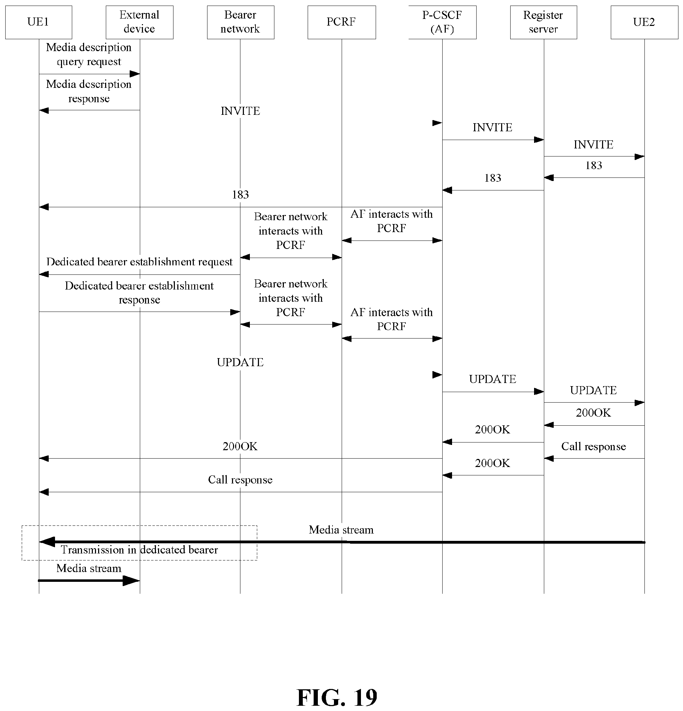

Embodiments of the present invention provide a calling process of a convergence device call. A signaling plane of the convergence device call remains in a UE1, and establishment of a dedicated bearer may generally be initiated by a network. Embodiments of the present invention will illustrate an example below in which the network establishes the dedicated bearer. FIG. 19 is a flowchart of a calling process of a convergence device call according to optional embodiments of the present invention. As illustrated in FIG. 19, the process includes the steps described below.

In step S1902, a UE1 sends a media description query to an external device.

In step S1904, the external device returns a media description.

In step S1906, the UE1 constructs an SDP using the media description of the external device, and sends an INVITE request. In a case of an IMS system, the INVITE request is sent to a P-CSCF.

In step S1908, the P-CSCF forwards the INVITE request to a register server.

In step S1910, the register server forwards the INVITE request to a UE2.

In step S1912, the UE2 sends a provisional response 183 that carries the media description of the UE2.

In step S1914, the register server forwards the provisional response 183 to the P-CSCF.

In step S1916, the register server forwards the provisional response 183 to the UE1.

In step S1918, an AF (P-CSCF) interacts with a PCRF to trigger establishment of a dedicated bearer.

In step S1920, the PCRF interacts with a bearer network to trigger establishment of the dedicated bearer.

In step S1922, the bearer network sends a dedicated bearer establishment request to the UE1.

In step S1924, the UE sends a dedicated bearer establishment response to the bearer network.

In step S1926, the bearer network interacts with the PCRF.

In step S 1928, the PCRF interacts with the AF.

In step S1930, the UE1 sends UPDATE which is then forwarded by an intermediate network element to the UE2.

In step S1932, the UE2 returns 200 OK which is then forwarded by the intermediate network element to the UE1.

In step S1934, the UE2 returns a call response which is then forwarded by the intermediate network element to the UE1.

In step S1936, a media stream is established. This media stream is between the UE and the bearer network and is transmitted on the dedicated bearer.

It is to be noted that, to illustrate a forwarding relationship, FIG. 19 depicts only a downlink direction. In practice, both uplink and downlink directions exist.

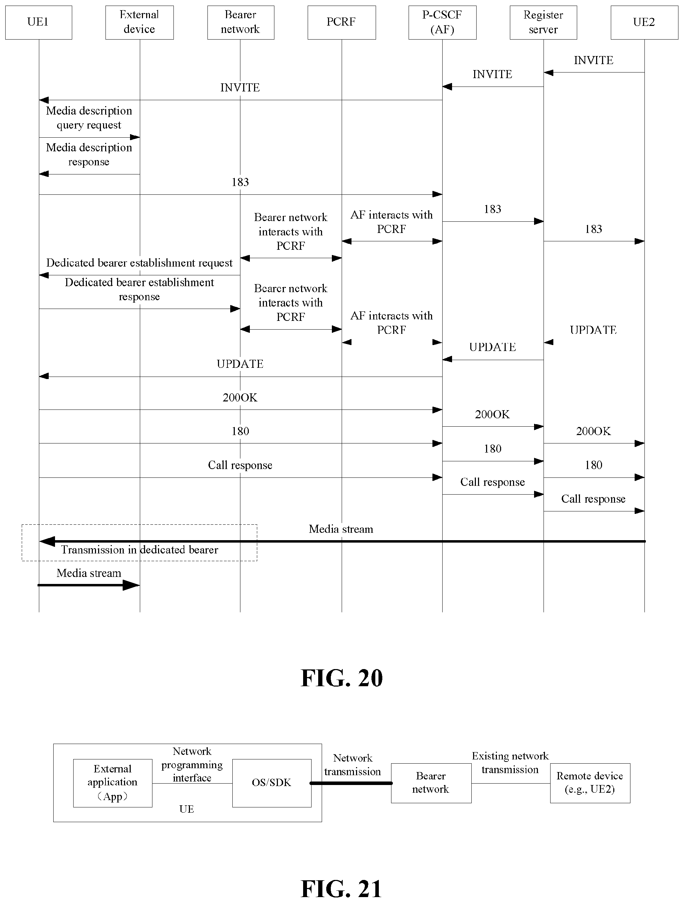

Embodiments of the present invention provide a called process of a convergence device call. FIG. 20 is a flowchart of a called process of a convergence device call according to optional embodiments of the present invention. As illustrated in FIG. 20, the process includes the steps described below.

In step S2002, a UE2 sends an INVITE request to a register server.

In step S2004, the register server forwards the INVITE request to a P-CSCF.

In step S2006, the register server forwards the INVITE request to a UE1.

In step S2008, the UE1 sends a media description query to an external device.

In step S2010, the external device returns a media description.

In step S2012, the UE1 uses the media description of the external device, constructs an SDP, and sends a provisional response 183.

In step S2014, the P-CSCF forwards the provisional response 183 to the register server.

In step S2016, the register server forwards the provisional response 183 to the UE2.

In step S2018, an AF (P-CSCF) interacts with a PCRF to trigger establishment of a dedicated bearer.

In step S2020, the PCRF interacts with a bearer network to trigger establishment of the dedicated bearer.

In step S2022, the bearer network sends a dedicated bearer establishment request to the UE.

In step S2024, the UE sends a dedicated bearer establishment response to the bearer network.

In step S2026, the bearer network interacts with the PCRF.

In step S2028, the PCRF interacts with the AF.

In step S2030, the UE2 sends UPDATE which is then forwarded by an intermediate network element to the UE1.

In step S2032, the UE1 returns 200 OK which is then forwarded by the intermediate network element to the UE2.

In step S2034, the UE1 returns user a ring 180 which is then forwarded by the intermediate network element to the UE2.

In step S2036, the UE1 returns a call response which is then forwarded by the intermediate network element to the UE2.

In step S2038, a media stream is established. This media stream is between the UE and the bearer network and is transmitted in the dedicated bearer.

It is to be noted that, to illustrate a forwarding relationship, FIG. 20 depicts only a downlink direction. In practice, both uplink and downlink directions exist.

To implement the above solutions of embodiments of the present invention, a UE is provided. FIG. 21 is a schematic diagram of a user equipment and its position in a system for establishing a dedicated bearer according to optional embodiments of the present invention. As illustrated in FIG. 21, the UE is capable of opening an internal structure for establishing a dedicated bearer to an external application. The external application may be a built-in application (App) of the UE, or may be a wireless router control module that provides an external media stream.

An operating system (OS) or a software development kit (SDK) inside the UE provides a network programming interface that supports the dedicated bearer, creates a responsive connection, implements transmission using the dedicated bearer in a bearer network, and establishes a media stream with a remote device.

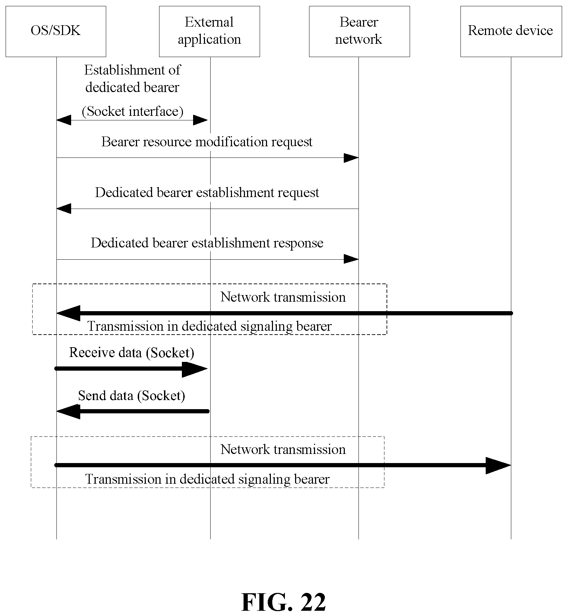

FIG. 22 is a flowchart of a process in which an external application supports QoS according to embodiments of the present invention. As illustrated in FIG. 22, the process includes the steps described below.

In step S2202, the external application calls an OS/SDK socket interface to establish a dedicated bearer.

In step S2204, the OS/SDK sends a bearer resource modification request to a bearer network.

In step S2206, the bearer network sends a dedicated bearer establishment request to the OS/SDK.

In step S2208, the OS/SDK sends a dedicated bearer establishment response to the bearer network.

In step S2210, data received or sent by the external application will be transmitted in the dedicated bearer.

To sum up, according to the above-mentioned embodiments and optional embodiments of the present invention, an architecture in which a plug-in media stream supports QoS is provided so that the media stream on an external device can be transmitted, under QoS assurance, through 3G/4G/5G of a UE1.

Industrial applicability: It can be seen from the above description that when it is determined that a media stream between an external device and a remote device needs to be transmitted via a user equipment, a dedicated bearer is established between the user equipment and a bearer network. As compared to a problem in which QoS cannot be assured for services of an external device because QoS cannot be controlled on a default bearer in the related art, the above steps in embodiments of the present invention allow QoS to be controlled for a media stream between the external device and a remote device, solve the problem in which the requirement on QoS of the media stream on the external device cannot be assured, and assure, through a dedicated bearer, QoS for transmission of the media stream of the external device.

Another embodiment provides a software configured to implement the solutions described in the above-mentioned embodiments and optional implementations.

Another embodiment provides a storage medium configured to store the above-mentioned software, including but not limited to an optical disk, a floppy disk, a hard disk and a rewritable memory.

It is to be noted that the terms "first", "second" and the like in the description, claims and drawings of the present invention are used to distinguish between similar objects and are not necessarily used to describe a particular order or sequence. It is to be understood that the objects used in this way are interchangeable where appropriate so that embodiments of the present invention described herein may also be implemented in a sequence not illustrated or described herein. In addition, the terms "comprising", "including" or any other variations thereof described herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

Apparently, those skilled in the art should know that each above-mentioned module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

The above are only optional embodiments of the present invention and are not intended to limit the present invention, and for those skilled in the art, the present invention may have various modifications and variations. Any modifications, equivalent substitutions, improvements and the like made within the spirit and principle of the present invention are within the scope of the present invention.

## Claims

1. A method for establishing a dedicated bearer, comprising:
determining that a media stream between an external device and a remote device needs to be transmitted via a user equipment, wherein the user equipment communicates with the remote device via a bearer network; and
establishing a dedicated bearer between the user equipment and the bearer network, wherein the media stream between the external device and the remote device is transmitted in the dedicated bearer.

2. The method of claim 1, wherein the determining that the media stream between the external device and the remote device needs to be transmitted via the user equipment comprises:
using the user equipment to receive a media description or a bearer resource modification request of the external device; and
using the user equipment to determine, according to the media description or the bearer resource modification request, that the media stream between the external device and the remote device needs to be transmitted via the user equipment.

3. The method of claim 2, before the using the user equipment to receive the media description of the external device, further comprising:
using the user equipment to send a media description query request or a call request of the remote device to the external device.

4. The method of claim 2, wherein the using the user equipment to determine that the media stream between the external device and the remote device needs to be transmitted via the user equipment comprises:
using the user equipment to receive a preset message of the external device, wherein the preset message comprises one of the following: a call request, a registration request, a call response and a media description query response, and the preset message carries the media description/the bearer resource modification request; and
using the user equipment to determine, according to the preset message, that the media stream between the external device and the remote device needs to be transmitted via the user equipment.

5. The method of claim 2, wherein the establishing the dedicated bearer between the user equipment and the bearer network comprises:
using the user equipment to send the bearer resource modification request to the bearer network,
wherein the bearer resource modification request is used for requesting to establish the dedicated bearer.

6. The method of claim 5, wherein the establishing the dedicated bearer between the user equipment and the bearer network comprises:
using the user equipment to send the bearer resource modification request to a packet data network gateway (P-GW) of the bearer network;
using the P-GW to interact with a policy and charging rules function (PCRF);
using the PCRF to trigger a process in which the bearer network establishes the dedicated bearer; and
using the bearer network to establish the dedicated bearer.

7. The method of claim 5, wherein the establishing the dedicated bearer between the user equipment and the bearer network comprises:
using the user equipment to send the bearer resource modification request to a PCRF of the bearer network;
using the PCRF to trigger a process in which the bearer network establishes the dedicated bearer; and
using the bearer network to establish the dedicated bearer.

8. The method of claim 1, wherein the determining that the media stream between the external device and the remote device needs to be transmitted via the user equipment comprises:
using the bearer network to receive a media description of the external device; and
using the bearer network to determine, according to the media description, that the media stream between the external device and the remote device needs to be transmitted via the user equipment.

9. The method of claim 8, wherein the establishing the dedicated bearer between the user equipment and the bearer network comprises:
using an application function (AF) of the bearer network to receive a call request sent by the user equipment;
using the AF to interact with a PCRF;
using the PCRF to trigger a process in which the bearer network establishes the dedicated bearer; and
using the bearer network to establish the dedicated bearer.

10. An apparatus for establishing a dedicated bearer, applied to a user equipment, comprising:
a determining module, which is configured to determine that a media stream between an external device and a remote device needs to be transmitted via the user equipment, wherein the user equipment communicates with the remote device via a bearer network; and
an establishing module, which is configured to establish a dedicated bearer between the user equipment and the bearer network, wherein the media stream between the external device and the remote device is transmitted in the dedicated bearer.

11. The apparatus of claim 10, wherein the determining module comprises:
a receiving unit, which is configured to receive a media description or a bearer resource modification request of the external device; and
a determining unit, which is configured to determine, according to the media description or the bearer resource modification request, that the media stream between the external device and the remote device needs to be transmitted via the user equipment.

12. The apparatus of claim 11, further comprising:
a sending module, which is configured to send a media description query request or a call request of the remote device to the external device.

13. The apparatus of claim 11, wherein
the receiving unit is configured to receive a preset message of the external device, wherein the preset message comprises one of the following: a call request, a registration request, a call response and a media description query response, and the preset message carries the media description/the bearer resource modification request; and
the determining unit is configured to determine, according to the preset message, that the media stream between the external device and the remote device needs to be transmitted via the user equipment.

14. The apparatus of claim 11, wherein
the establishing module is configured to send the bearer resource modification request to the bearer network, wherein the bearer resource modification request is used for requesting to establish the dedicated bearer.

15. An apparatus for establishing a dedicated bearer, applied to a bearer network, comprising:
a determining module, which is configured to determine that a media stream between an external device and a remote device needs to be transmitted via a user equipment, wherein the user equipment communicates with the remote device via a bearer network; and
an establishing module, which is configured to establish a dedicated bearer between the user equipment and the bearer network, wherein the media stream between the external device and the remote device is transmitted in the dedicated bearer.

16. The apparatus of claim 10, wherein the determining module comprises:
a receiving unit, which is configured to receive a media description of the external device; and
a determining unit, which is configured to determine, according to the media description, that the media stream between the external device and the remote device needs to be transmitted via the user equipment.

17. A user equipment, comprising: the apparatus for establishing a dedicated bearer of any one of claims 10 to 14.
